# EUROPEAN PATENT SPECIFICATION

(11) **EP 4 557 460 B1**
(45) Date of publication and mention of the grant of the patent: **11.03.2026**
(21) Application number: 24852927.3
(22) Date of filing: 31.07.2024
(51) Int. Cl.: H01M 10/613, H01M 10/625

(54) **LIQUID COOLING ASSEMBLY AND BATTERY PACK**
FLÜSSIGKEITSKÜHLANORDNUNG UND BATTERIEPACK
ENSEMBLE DE REFROIDISSEMENT DE LIQUIDE ET BLOC-BATTERIE

(30) Priority: 25.09.2023 CN 202322613031 U
(43) Date of publication of application: 21.05.2025
(73) Proprietor: Eve Energy Co., Ltd., Huizhou, Guangdong 516006 (CN)
(72) Inventor: ZHAO, Yuhang, Huizhou Guangdong 516006 (CN); YAN, Shiwei, Huizhou Guangdong 516006 (CN); ZHOU, Xiao, Huizhou Guangdong 516006 (CN); HUANG, Liansheng, Huizhou Guangdong 516006 (CN)
(74) Representative: Berggren Oy
(86) International application number: PCT/CN2024/108987
(87) International publication number: WO 2025/066531

(56) References cited:
- CN-U- 207 269 046
- CN-U- 218 101 445
- CN-U- 218 101 445
- CN-U- 218 783 100
- CN-U- 218 783 100
- CN-U- 219 226 394
- CN-U- 220 895 631
- JP-A- 2012 043 655

## Description

### TECHNICAL FIELD

The present application relates to the field of battery technologies, and in particular to a liquid cooling assembly and a battery pack.

### BACKGROUND

In the related art, liquid cooling plates are widely used in batteries, and the main function of the liquid cooling plates is to cool the battery through the circulation of coolant, thereby maintaining the stability of the battery temperature. Liquid cooling plates are usually connected to the liquid inlet pipe with the nylon tubes.

The liquid cooling plates are known from, for example, CN218783100U, CN219226394U, CN207269046U, and CN218101445U.

### SUMMARY

However, due to tolerances in the connection, it is difficult to assemble the liquid inlet pipe and the liquid cooling plate, which can easily cause leakage in both the liquid inlet pipe and the liquid cooling plate, thereby reducing the cooling efficiency and ultimately causing the battery to be damaged due to the excessive temperature of the battery. The present invention is set out in the appended set of claims.

### BENEFICIAL EFFECT

In the liquid cooling assembly provided by the present application, by setting a first mating tube between the liquid cooling plate and the liquid inlet main pipe, because the first mating tube is at least partially flexible, the first mating tube can absorb the tolerances of both the liquid inlet main pipe and the liquid cooling plate during the connection process. In this way, the assembly of the liquid inlet main pipe and the liquid cooling plate becomes simple, and the reliability of the connection between the liquid inlet main pipe and the liquid cooling plate is ensured, and leakage between the liquid inlet pipe and the liquid cooling plate is avoided, thereby avoiding the phenomenon of reducing cooling efficiency due to the leakage.

In the battery pack provided in the present application, the liquid cooling plate is connected to the liquid inlet main pipe via the first mating tube. Since the first mating tube is at least partially flexible, the tolerances of the liquid inlet main pipe and the liquid cooling plate can be absorbed during the connection process, In this way, the assembly of the liquid inlet main pipe and the liquid cooling plate becomes simple, and the reliability of the connection between the liquid inlet main pipe and the liquid cooling plate is ensured, and leakage between the liquid inlet pipe and the liquid cooling plate is avoided, thereby avoiding the phenomenon of reducing cooling efficiency due to the leakage.

### BRIEF DESCRIPTION OF THE DRAWINGS

FIG. 1 is a first perspective schematic diagram of a liquid cooling assembly provided by the present application;
FIG. 2 is a second perspective schematic diagram of a liquid cooling assembly provided by the present application;
FIG. 3 is a perspective schematic diagram of a liquid cooling assembly and a cylindrical battery provided by the present application ;
FIG. 4 is a perspective schematic diagram of a first mating tube provided by the present application;
FIG. 5 is a perspective schematic diagram of first mating tubes and a liquid inlet main pipe provided by the present application;
FIG. 6 is a perspective schematic diagram of a liquid cooling plate provided in the present application ;
FIG. 7 is a perspective schematic diagram of a liquid inlet main pipe provided by the present application ;
FIG. 8 is a third perspective schematic diagram of a liquid cooling assembly provided by the present application;
FIG. 9 is a fourth perspective schematic diagram of a liquid cooling assembly provided by the present application;
FIG. 10 is a perspective schematic diagram of a liquid return main pipe provided by the present application;
FIG. 11 is a perspective schematic diagram of second mating tubes and a liquid return main pipe provided by the present application; and
FIG. 12 is a perspective schematic diagram of a liquid return main pipe provided in the present application.

Reference signs:
10-liquid cooling plate, 101-liquid inlet, 102-liquid return port, 11-second joint, 12-fourth joint, 20-liquid inlet main pipe, 201-first mating port, 202-total water inlet, 21-first main pipe, 211-first joint, 22-first quick-plug connector, 30-first mating tube, 31-first straight pipe section, 32-first corrugated section, 33-second straight pipe section, 40-liquid return main pipe, 401-second mating port, 402-total water return port, 41-second main pipe, 411-third joint, 42-second quick-plug connector, 50-second mating tube, 51-third straight pipe section, 52-second corrugated section, and 53-fourth straight pipe section.

### DETAILED DESCRIPTION

In the description of the present application, unless otherwise expressly specified and limited, the terms "conjoint", "connect", and "fix" are to be understood in a broad sense, for example, as a fixed connection, as a detachable connection, or as a one-piece connection; also as a mechanical connection or an electrical connection; or may be directly connected or indirectly connected by means of an intermediate medium; or may be internal communication of the two elements or interaction of the two elements. The specific meaning of the above terms in the present application may be understood by one of ordinary skill in the art as the case may be.

In the description of this embodiment, the terms "first" and "second" are used to distinguish in the description and have no special meanings.

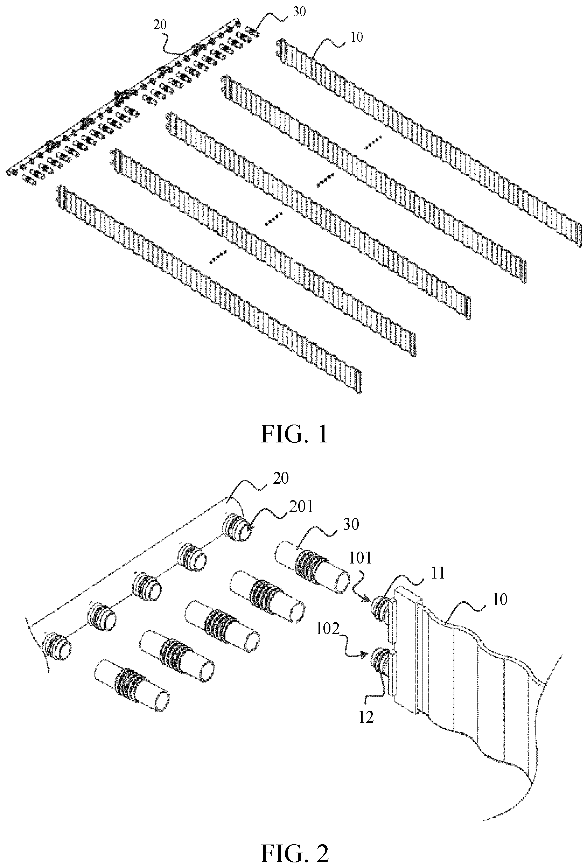

The embodiments of the present application provide a liquid cooling plate assembly. FIG. 1 is a first perspective schematic diagram of the liquid cooling assembly provided by the embodiments of the present application, and FIG. 2 is a second perspective schematic diagram of the liquid cooling assembly provided by the embodiments of the present application. Referring to FIG. 1 and FIG. 2, the liquid cooling assembly includes a plurality of liquid cooling plates 10 and a liquid inlet main pipe 20. The plurality of liquid cooling plates 10 are arranged in sequence and spaced apart, and an installation space for installing a heating element is formed between adjacent liquid cooling plates 10. Each liquid cooling plate 10 includes a circulation channel (not shown in the figure) and a liquid inlet 101 connected to the circulation channel. The liquid inlet main pipe 20 includes a plurality of first mating ports 201. The plurality of first mating ports 201 and the plurality of liquid inlets 101 are arranged by one-to-one correspondence. A first mating tube 30 is connected between the first mating port 201 and the liquid inlet 101, and the first mating tube 30 is at least partially flexible.

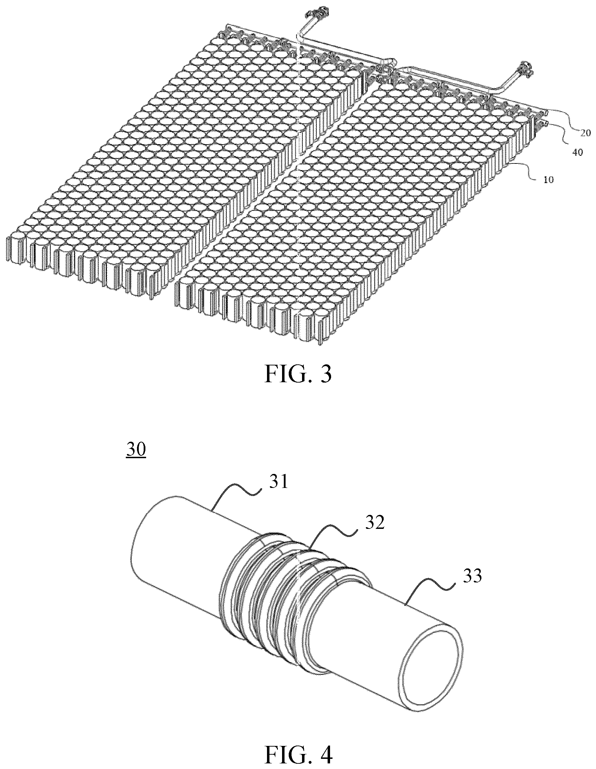

In some embodiments of the present application, FIG. 3 is a perspective schematic diagram of a liquid cooling assembly and a cylindrical battery provided in embodiments of the present application. Referring to FIGS. 1 to 3, the heating element may be a cylindrical battery, and the shape of the liquid cooling plate 10 may be a serpentine shape. This design may increase the contact area between the liquid cooling plate 10 and the cylindrical battery, thereby improving the cooling efficiency. The number of liquid cooling plates 10 may be 2, 3 or more. The liquid cooling plate 10 and the circulation channel of the liquid cooling plate are integrally formed, for example, by casting or 3D printing.

It can be understood that the heating element may also be a battery that is approximately in the shape of a rectangular parallelepiped, and the shape of the liquid cooling plate 10 may also be a shape of a flat plate, so that the heating element is in full contact with the liquid cooling plate 10.

In some embodiments of the present application, the liquid inlet 101 may refer to an opening opened in the surface of the liquid cooling plate 10. In some embodiments of the present application, as shown in FIG. 2 , a second joint 11 may be provided protruding from the surface of the liquid cooling plate 10. A through hole of the joint defines the liquid inlet 101, so as to facilitate to connect the first mating tube 30 through the second joint 11.

In some embodiments of the present application, referring to FIG. 1 and FIG. 2, the number of the first mating ports 201 may be 2, or 3 or more. In some embodiments of the present application, the first mating port 201 may refer to an opening opened in the surface of the liquid inlet main pipe 20. In some embodiments of the present application, as shown in FIG. 2, a joint may be provided protruding from the surface of the liquid inlet main pipe 20, and a through hole of the joint defines the first mating port 201, so as to facilitate connect the first mating tube 30 through the joint.

In some embodiments of the present application, the liquid inlet main pipe 20 may be composed of a whole pipe. In some other embodiments of the present application, the liquid inlet main pipe 20 may be composed of multiple pipes connected in series, so as to facilitate replacement when one pipe is damaged.

A first mating tube 30 is connected between the first mating port 201 of the liquid inlet main pipe 20 and the liquid inlet 101 of the liquid cooling plate 10, and the first mating tube 30 is at least partially flexible. Since the first mating tube 30 is at least partially flexible, that is, the first mating tube 30 has elasticity and scalability, the first mating tube 30 can absorb the tolerances of both the liquid inlet main pipe 20 and the liquid cooling plate 10 during the connection. In this way, the assembly of the liquid inlet main pipe 20 and the liquid cooling plate 10 becomes simple, and the reliability of the connection between the liquid inlet main pipe 20 and the liquid cooling plate 10 is ensured, and leakage between the liquid inlet main pipe 20 and the liquid cooling plate 10 is avoided, thereby avoiding the phenomenon that the cooling efficiency is reduced due to the leakage.

Exemplarily, the first mating tube 30 may be a flexible and bent pipe such as a hose or a corrugated tube.

In some embodiments of the present application, referring to FIG. 1 and FIG. 3, the liquid inlet 101 and the liquid return port 102 of the liquid cooling plate 10 are arranged at the same end, and the circulation channel can be arranged in a U-shape, which has better temperature uniformity. Of course, FIG. 1 and FIG. 3 are only schematic illustrations of the liquid inlet 101 and the liquid return port 102. In other embodiments, the liquid return port 102 can be arranged at the end of the liquid cooling plate 10 facing away from the liquid inlet 101. The circulation channel can be arranged in a straight line or a curve.

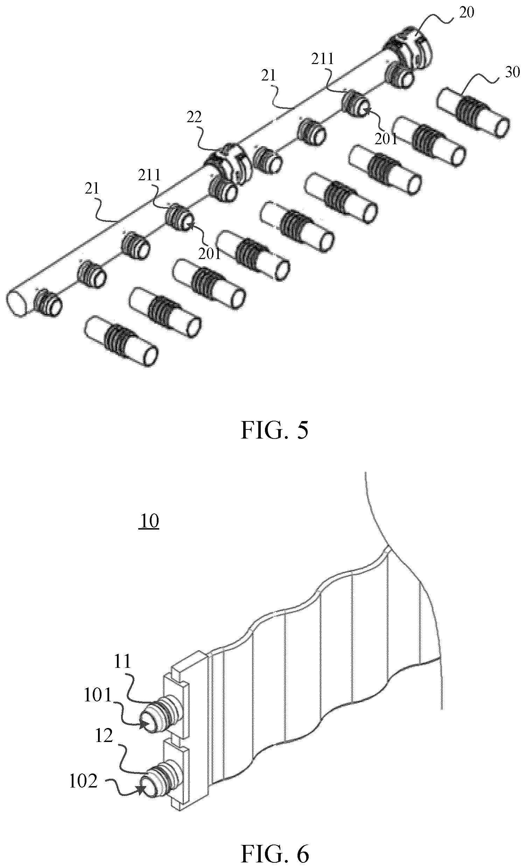

In some embodiments of the present application, FIG. 4 is a perspective schematic diagram of a first mating tube 30 provided in an embodiment of the present application, FIG. 5 is a perspective schematic diagram of a first mating tube 30 and a liquid inlet main pipe 20 provided in an embodiment of the present application; and FIG. 6 is a perspective schematic diagram of a liquid cooling plate 10 provided in an embodiment of the present application. Referring to FIGS. 4 to 6, the first mating tube 30 has a first straight pipe section 31, a first corrugated section 32, and a second straight pipe section 33. The first corrugated section 32 is located between the first straight pipe section 31 and the second straight pipe section 33. The first straight pipe section 31 is connected to the first mating port 201, the second straight pipe section 33 is connected to the liquid inlet 101, and the first corrugated section 32 is flexible.

Specifically, the first corrugated section 32 is a corrugated tube. Since the corrugated tube has elasticity and scalability, the tolerances of both the liquid inlet main pipe 20 and the liquid cooling plate 10 can be absorbed during the connection, thereby simplifying the assembly of the liquid inlet main pipe 20 and the liquid cooling plate 10. At the same time, the first straight pipe section 31 and the second straight pipe section 33 are both straight pipes. A pore size of the first straight pipe section 31 matches a pore size of the first mating port 201. A pore size of the second straight pipe section 33 matches a pore size of the liquid inlet 101. So, the first straight pipe section 31 is tightly connected to the first mating port 201, and the second straight pipe section 33 is tightly connected to the liquid inlet 101, thereby ensuring that the coolant does not leak, and further improving the cooling efficiency.

In some embodiments of the present application, referring to FIGS. 4 to 6, the liquid inlet main pipe 20 has a plurality of first joints 211, and the first joint 211 define the first mating port 201. The liquid cooling plate 10 has a second joint 11 defining a liquid inlet port 101. The first straight pipe section 31 is sleeved with the first joint 211, and the second straight pipe section 33 is sleeved with the second joint 11. The first joint 211 and the second joint 11 can improve the strength of the first mating tube 30. In one example, the first straight pipe section 31 can be sleeved on the first joint 211, and the second straight pipe section 33 can be sleeved on the second joint 11. In another example, the first joint 211 can be sleeved on the first straight pipe section 31, and the second joint 11 can be sleeved on the second straight pipe section 33. Specifically, the first joint 211 and the second joint 11 are both bamboo joints. The first joint 211 can improve the strength of the first straight pipe section 31, and the second joint 11 can improve the strength of the second straight pipe section 33.

In some embodiments of the present application, the first straight pipe section 31 is expanded with the first joint 211, and the second straight pipe section 33 is expanded with the second joint 11, so as to prevent the first straight pipe section 31 and the second straight pipe section 33 from falling off. In one example, an end of the first straight pipe section 31 is inserted into a hole of the first joint 211. For example, the end of the first straight pipe section 31 is expanded by a pipe expander, and the first straight pipe section 31 and the first joint 211 are tightly connected by utilizing the plastic deformation of the first straight pipe section 31 and the elastic deformation of the hole of the first joint 211. In another example, an end of the first joint 211 is inserted into a hole of the first straight pipe section 31. For example, the end of the first joint 211 is expanded by a pipe expander, and the first straight pipe section 31 and the first joint 211 are tightly connected by utilizing the plastic deformation of the first joint 211 and the elastic deformation of the hole of the first straight pipe section 31. In one example, an end of the second straight pipe section 33 is inserted into a hole of the second joint 11. For example, the end of the second straight pipe section 33 is expanded by a pipe expander, and the second straight pipe section 33 and the second joint 11 are tightly connected by using the plastic deformation of the second straight pipe section 33 and the elastic deformation of the hole of the second joint 11. In another example, an end of the second joint 11 is inserted into a hole of the second straight pipe section 33. For example, the end of the second joint 11 is expanded by a pipe expander, and the second straight pipe section 33 and the second joint 11 are tightly connected by using the plastic deformation of the second joint 11 and the elastic deformation of the hole of the second straight pipe section 33.

It is understandable that the first joint 211 and the second joint 11 may also be connected to the first mating tube 30 in other ways, such as welding or threaded connection.

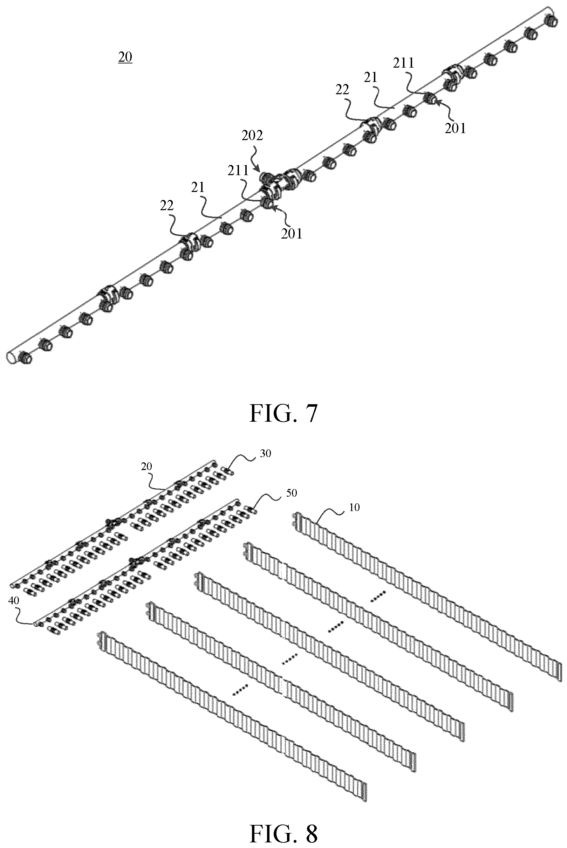

In some embodiments of the present application, FIG. 7 is a perspective schematic diagram of a liquid inlet main pipe 20 provided in an embodiment of the present application. Referring to FIG. 7, the liquid inlet main pipe 20 includes a plurality of first main pipes 21 that are separately arranged, and the plurality of first main pipes 21 are connected in sequence. At least some of the first main pipes 21 have first mating ports 201. The first main pipe 21 is arranged with a plurality of first joints 211, and the first joints 211 are integrally formed with the first main pipe 21. The number of the first main pipes 21 may be 1, 2, 3 or more than 3. Each first main pipe 21 may be provided with one, two, three or more than three first joints 211. The first joints 211 are integrally formed with the first main pipe 21, for example, by casting or 3D printing, etc., which can reduce the cost of the liquid cooling assembly and improve the structural strength of the liquid inlet main pipe 20.

In some embodiments of the present application, referring to FIG. 7, a first quick-plug connector 22 is provided between adjacent first main pipes 21, and the first quick-plug connector 22 is enabled to communicate the adjacent first main pipes 21. Since the first quick-plug connector 22 can be quickly connected and disconnected, the number of first main pipes 21 can be flexibly set according to actual needs, thereby reducing the waste of the first main pipes 21 and improving the use efficiency. Here, the material of the first quick-plug connector 22 can be plastic, such as PA66 GF30. The first quick-plug connector 22 can be of a finished pipe connection structure, such as a pipe hoop, a quick connector, etc.

In some embodiments of the present application, referring to FIG. 6 and FIG. 7, the liquid inlet main pipe 20 has a total water inlet 202. Along the direction away from the total water inlet 202, inner diameters of the plurality of first joints 211 gradually increase, so that the flow rate of each first joint 211 flowing into the liquid cooling plate 10 can be equal to each other.

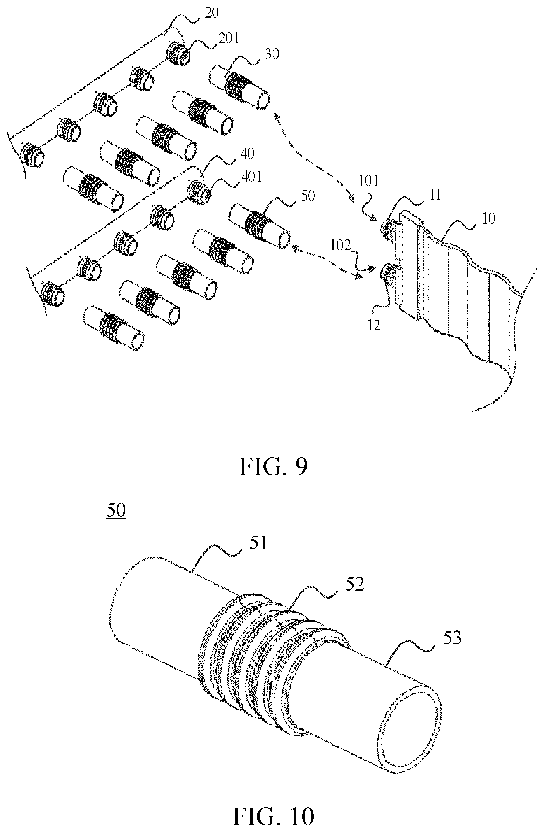

In some embodiments of the present application, FIG. 8 is a third perspective schematic diagram of the liquid cooling assembly provided by the embodiment of the present application; and FIG. 9 is a fourth perspective schematic diagram of the liquid cooling assembly provided by the embodiment of the present application. Referring to FIG. 8 and FIG. 9, the liquid cooling assembly further includes a liquid return pipe 40. Each liquid cooling plate 10 includes the liquid return port 102 in communication with the circulation channel. The liquid return pipe 40 has a plurality of second mating ports 401. The plurality of second mating ports 401 and the plurality of liquid return ports 102 are arranged by one-to-one correspondence. A second mating tube 50 is connected between the second mating port 401 and the liquid return port 102, and the second mating tube 50 is at least partially flexible.

The number of the second mating ports 401 in the some embodiments of the present application may be 2, 3 or more. In some embodiments of the present application, the second mating port 401 may refer to an opening opened in the surface of the liquid return main pipe 40. In some embodiments of the present application, as shown in FIG. 9, a joint may be provided protruding from the surface of the liquid return main pipe 40, and a through hole of the joint defines the second mating port 401, so as to facilitate to connect with the second mating tube 50 through the joint.

In some embodiments of the present application, the liquid return main pipe 40 may be composed of a whole pipe. In some other embodiments of the present application, the liquid return main pipe 40 may be composed of a plurality of pipes connected in series, so as to facilitate replacement when one pipe is damaged.

The second mating tube 50 is connected between the second mating port 401 of the liquid return main pipe 40 and the liquid return port 102 of the liquid cooling plate 10, and the second mating tube 50 is at least partially flexible. Since the second mating tube 50 is at least partially flexible, that is, the second mating tube 50 has elasticity and scalability, the second mating tube 50 can absorb the tolerances of both the liquid return main pipe 40 and the liquid cooling plate 10 during the connection, thereby simplifying the assembly of the liquid return main pipe 40 and the liquid cooling plate 10. So, it can ensure the reliability of the connection between the liquid return main pipe 40 and the liquid cooling plate 10, thereby avoiding leakage between the liquid return main pipe 40 and the liquid cooling plate 10, and further avoiding the phenomenon of reducing the cooling efficiency due to leakage.

Exemplarily, the second mating tube 50 may be a flexible and bent pipe such as a hose or a corrugated pipe.

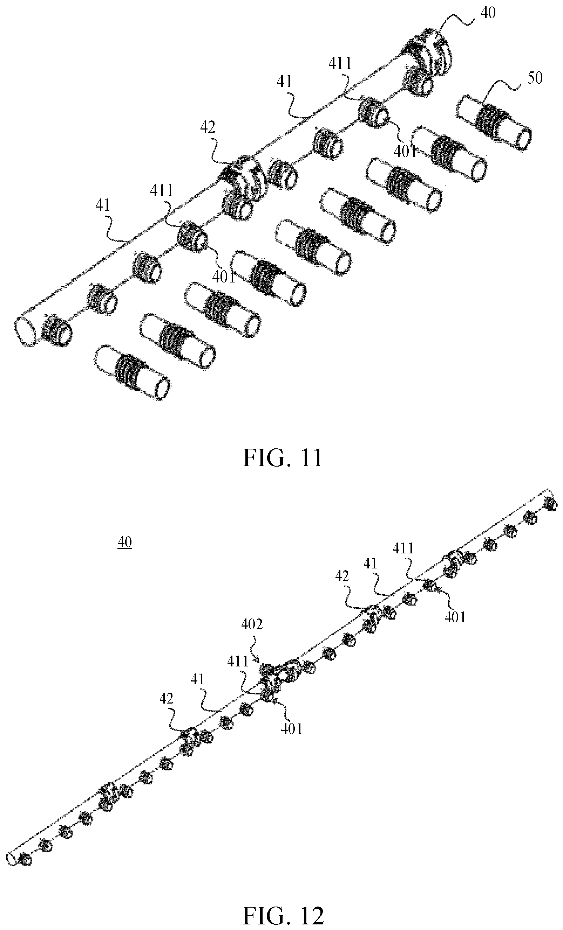

In some embodiments of the present application, FIG. 10 is a perspective schematic diagram of the liquid return main pipe 40 provided in the embodiment of the present application, and FIG. 11 is a perspective schematic diagram of the second mating tube 50 and the liquid return main pipe 40 provided in the embodiment of the present application. Referring to FIGS. 9 to 11, the second mating tube 50 has a third straight pipe section 51, a second corrugated section 52 and a fourth straight pipe section 53. The second corrugated section 52 is located between the third straight pipe section 51 and the fourth straight pipe section 53. The third straight pipe section 51 is connected to the second mating port 401, the fourth straight pipe section 53 is connected to the liquid return port 102, and the second corrugated section 52 is flexible. Specifically, the second corrugated section 52 is a corrugated pipe. Because the corrugated pipe has elasticity and flexibility, the second corrugated section 52 can absorb the tolerances of both the liquid return main pipe 40 and the liquid cooling plate 10 during the connection process, thereby simplifying the assembly of the liquid return main pipe 40 and the liquid cooling plate 10. At the same time, the third straight pipe section 51 and the fourth straight pipe section 53 are both straight pipes. A pore size of the third straight pipe section 51 matches a pore size of the second mating port 401. A pore size of the fourth straight pipe section 53 matches a pore size of the liquid return port 102. In this way, the third straight pipe section 51 is tightly connected to the second mating port 401, and the fourth straight pipe section 53 is tightly connected to the liquid return port 102, thereby ensuring that the coolant does not leak, and further improving the cooling efficiency.

In some embodiments of the present application, referring to FIGS. 9 to 11, the liquid return main pipe 40 has a plurality of third joints 411, and the third joint 411 define a second mating port 401. The liquid cooling plate 10 has a fourth joint 12 defining a liquid return port 102. The third straight pipe section 51 is sleeved with the third joint 411, and the fourth straight pipe section 53 is sleeved with the fourth joint 12. The third joint 411 and the fourth joint 12 can improve the strength of the second mating tube 50. In one example, the third straight pipe section 51 can be sleeved on the third joint 411, and the fourth straight pipe section 53 can be sleeved on the fourth joint 12. In another example, the third joint 411 can be sleeved on the third straight pipe section 51, and the fourth joint 12 can be sleeved on the fourth straight pipe section 53. Specifically, the third joint 411 and the fourth joint 12 are both bamboo joints, the third joint 411 can improve the strength of the third straight pipe section 51, and the fourth joint 12 can improve the strength of the fourth straight pipe section 53.

In some embodiments of the present application, referring to FIGS. 9 to 11, the third straight pipe section 51 is expanded with the third joint 411, and the fourth straight pipe section 53 is expanded with the fourth joint 12, so as to prevent the third straight pipe section 51 and the fourth straight pipe section 53 from falling off. In one example, an end of the third straight pipe section 51 is inserted into a hole of the third joint 411. For example, the end of the third straight pipe section 51 is expanded by a pipe expander, and the third straight pipe section 51 and the third joint 411 are tightly connected by using the plastic deformation of the third straight pipe section 51 and the elastic deformation of the hole of the third joint 411. In another example, an end of the third joint 411 is inserted into a hole of the third straight pipe section 51. For example, the end of the third joint 411 is expanded by a pipe expander, and the third straight pipe section 51 and the third joint 411 are tightly connected by using the plastic deformation of the third joint 411 and the elastic deformation of the hole of the third straight pipe section 51. In one example, an end of the fourth straight pipe section 53 is inserted into a hole of the fourth joint 12. For example, the end of the fourth straight pipe section 53 is expanded by a pipe expander, and the fourth straight pipe section 53 and the fourth joint 12 are tightly connected by utilizing the plastic deformation of the fourth straight pipe section 53 and the elastic deformation of the hole of the fourth joint 12. In another example, an end of the fourth joint 12 is inserted into a hole of the fourth straight pipe section 53. For example, the end of the fourth joint 12 is expanded by a pipe expander, and the fourth straight pipe section 53 and the fourth joint 12 are tightly connected by utilizing the plastic deformation of the fourth joint 12 and the elastic deformation of the hole of the fourth straight pipe section 53 .

It is understandable that the third joint 411 and the fourth joint 12 may also be connected to the second mating tube 50 in other ways, such as welding or threaded connection.

In some embodiments of the present application, FIG. 12 is a perspective schematic diagram of a liquid return main pipe provided in an embodiment of the present application. Referring to FIG. 12, the liquid return main pipe 40 includes a plurality of second main pipes 41, and the plurality of second main pipes 41 are connected in sequence. The second main pipes 41 are disposed separately, and the second main pipe 41 has a second mating port 401. The second main pipe 41 is arranged with a plurality of third joints 411, and the third joints 411 are integrally formed with the second main pipe 41. The number of the second main pipes 41 may be 1, 2, 3 or more than 3. Each second main pipe 41 may be provided with one, two, three or more than three third joints 411. The third joints 411 are integrally formed with the second main pipe 41, for example, by casting or 3D printing, etc., which can reduce the cost of the liquid cooling assembly and improve the structural strength of the liquid return main pipe 40.

In some embodiments of the present application, referring to FIG. 12, a second quick-plug connector 42 is provided between adjacent second main pipes 41. The second quick-plug connector 42 is enabled to communicate with the adjacent second main pipes 41. The adjacent second main pipes 41 can be quickly connected and disconnected by the second quick-plug connector 42. So, the number of second main pipes 41 can be flexibly set according to actual needs, thereby reducing the waste of the second main pipes 41 and improving the use efficiency. Here, the material of the second quick-plug connector 42 can be plastic, such as PA66 GF30. The second quick-plug connector 42 can be of a finished pipe connection structure, such as a pipe hoop, a quick connector, etc.

In some embodiments of the present application, the liquid return main pipe 40 has a total water return port 402. Along a direction away from the total water return port 402, inner diameters of the plurality of third joints 411 gradually increase, so that the flow rate of each third joint 411 out of the liquid cooling plate 10 can be equal to each other.

In some embodiments of the present application, referring to FIG. 2 and FIG. 3, the liquid inlet 101 and the liquid return port 102 are arranged at the same end of the liquid cooling plate 10, and the liquid inlet main pipe 20 and the liquid return main pipe 40 are located at the same ends of the liquid cooling plates 10, which can save space and costs. Here, the liquid return port 102 can be arranged on an upper side of the liquid cooling plate 10, and the liquid inlet 101 can be arranged on a lower side of the liquid cooling plate 10. Or, the liquid return port 102 can be arranged on the lower side of the liquid cooling plate 10, and the liquid inlet 101 can be arranged on the upper side of the liquid cooling plate 10.

Furthermore, in order to better implement the liquid cooling assembly in the embodiment of the present application, on the basis of the liquid cooling assembly, the present application also provides a battery pack. The battery pack includes the liquid cooling assembly as in the above embodiments. In the battery pack of the present application, the liquid inlet main pipe is connected to the liquid cooling plate through the first mating tube. Since the first mating tube is at least partially flexible, the tolerances of both the liquid inlet pipe and the liquid cooling plate can be absorbed during the connection process, thereby making the assembly of the liquid inlet main pipe and the liquid cooling plate simple, and ensuring the reliability of the connection between the liquid inlet main pipe and the liquid cooling plate, avoiding leakage between the liquid inlet main pipe and the liquid cooling plate, and further avoiding the phenomenon of reducing cooling efficiency due to leakage.

## Claims

1. A liquid cooling assembly comprising:
a plurality of liquid cooling plates (10), wherein the plurality of liquid cooling plates (10) are arranged in sequence at intervals, an installation space for installing a heating element is formed between adjacent ones of the plurality of liquid cooling plates (10), and the plurality of liquid cooling plates (10) comprise circulation channels, and liquid inlets (101) each communicating with a corresponding one of the circulation channels; and
a liquid inlet main pipe (20), wherein the liquid inlet main pipe (20) comprises a plurality of first mating ports (201), and the plurality of first mating ports (201) and the liquid inlets (101) are arranged by one-to-one correspondence;
wherein first mating tubes (30) are connected between the first mating ports (201) and the liquid inlets (101), and each of the first mating tubes (30) is at least partially flexible;
wherein the liquid inlet main pipe (20) comprises a plurality of first joints (211), and the first joints (211) define the first mating ports (201); each of the first mating tubes (30) comprises a first straight pipe section (31), a first corrugated section (32) and a second straight pipe section (33); the first corrugated section (32) is located between the first straight pipe section (31) and the second straight pipe section (33); the first straight pipe section (31) is connected to a respective one of the first mating ports (201); the second straight pipe section (33) is connected to a respective one of the liquid inlets (101); and the first corrugated section (32) is flexible;
each of the liquid cooling plates (10) comprises a second joint (11) defining a respective one of the liquid inlets (101), the first straight pipe section (31) is sleeved with a respective one of the first joints (211), and the second straight pipe section (33) is sleeved with the second joint (11);
**characterized in that** the liquid inlet main pipe (20) comprises a total water inlet (202); and
in a direction away from the total water inlet (202), inner diameters of the plurality of first joints (211) gradually increase.

2. The liquid cooling assembly according to claim 1, wherein the first straight pipe section (31) is expanded with the first joint (211), and the second straight pipe section (33) is expanded with the second joint (11).

3. The liquid cooling assembly according to claim 1, wherein a pore size of the first straight pipe section (31) is matched with a pore size of the first mating port (201), and a pore size of the second straight pipe (33) is matched with a pore size of the liquid inlet (101).

4. The liquid cooling assembly according to claim 1, wherein the liquid inlet main pipe (20) comprises a plurality of first main pipes (21) which are separately arranged, and the plurality of first main pipes (21) are connected in sequence;
at least a part of the plurality of first main pipes (21) have ones of the plurality of first mating ports (201).

5. The liquid cooling assembly according to claim 4, wherein a first quick-plug connector (22) is provided between adjacent ones of the plurality of first main pipes (21), and the first quick-plug connector (22) is in communication with the adjacent ones of the plurality of first main pipes (21).

6. The liquid cooling assembly according to claim 1, further comprising a liquid return main pipe (40), wherein the plurality of liquid cooling plates (10) comprise liquid return ports (102) in communication with the circulation channels;
the liquid return main pipe (40) comprises a plurality of second mating ports (401), the plurality of second mating ports (401) and the liquid return ports (102) are arranged by one-to-one correspondence, a second mating tube (50) is connected between each of the second mating ports (401) and a respective one of the liquid return ports (102), and the second mating tube (50) is at least partially flexible.

7. The liquid cooling assembly according to claim 6, wherein the second mating tube (50) comprises a third straight pipe section (51), a second corrugated section (52) and a fourth straight pipe section (53), the second corrugated section (52) is arranged between the third straight pipe section (51) and the fourth straight pipe section (53), the third straight pipe section is connected to the second mating port (401), the fourth straight pipe section (53) is connected to the liquid return port (102), and the second corrugated section is flexible.

8. The liquid cooling assembly according to claim 7, wherein a pore size of the third straight pipe section (51) matches a pore size of the second mating port (401), and a pore size of the fourth straight pipe section (53) matches a pore size of the liquid return port (102).

9. The liquid cooling assembly according to claim 7, wherein the liquid return main pipe (40) comprises a plurality of third joints (411), and the third joints define the second mating ports (401), each of the liquid cooling plates comprises a fourth joint (12) defining the liquid return port, the third straight pipe section (51) is sleeved with a respective one of the third joints (411), and the fourth straight pipe section (53) is sleeved with the fourth joint (12).

10. The liquid cooling assembly according to claim 6, wherein each of the liquid inlets and a corresponding one of the liquid return ports (102) are arranged at a same end of a respective one of the liquid cooling plates (10), and the liquid inlet main pipe (20) and the liquid return main pipe (40) are located at same ends of the liquid cooling plates (10).

11. The liquid cooling assembly according to claim 6, wherein the liquid return port (102) is arranged at an end of the liquid cooling plate which is away from a respective one of the liquid inlets (101).

12. A battery pack, comprising the liquid cooling assembly according to any one of claims 1 to 11.

## Patentansprüche

1. Flüssigkühlanordnung, umfassend:
eine Vielzahl von Flüssigkühlplatten (10), wobei die Vielzahl von Flüssigkühlplatten (10) in Folge in Abständen angeordnet sind, ein Montageraum zum Montieren eines Wärmeelements zwischen benachbarten Flüssigkühlplatten der Vielzahl von Flüssigkühlplatten (10) ausgebildet ist und die Vielzahl von Flüssigkühlplatten (10) Zirkulationskanäle und Flüssigkeitseinlässe (101) umfassen, die jeweils mit einem entsprechenden der Zirkulationskanäle in Verbindung stehen; und
eine Flüssigkeitseintritts-Hauptleitung (20), wobei die Flüssigkeitseintritts-Hauptleitung (20) eine Vielzahl von ersten Anschlussöffnungen (201) umfasst und die Vielzahl von ersten Anschlussöffnungen (201) und die Flüssigkeitseinlässe (101) in Eins-zu-eins-Entsprechung angeordnet sind;
wobei erste Verbindungsrohre (30) zwischen den ersten Anschlussöffnungen (201) und den Flüssigkeitseinlässen (101) verbunden sind und jedes der ersten Verbindungsrohre (30) zumindest teilweise flexibel ist;
wobei die Flüssigkeitseintritts-Hauptleitung (20) eine Vielzahl von ersten Fittingen (211) umfasst und die ersten Fittinge (211) die ersten Anschlussöffnungen (201) definieren; jedes der ersten Verbindungsrohre (30) einen ersten geraden Rohrabschnitt (31), einen ersten Wellrohrabschnitt (32) und einen zweiten geraden Rohrabschnitt (33) umfasst; der erste Wellrohrabschnitt (32) zwischen dem ersten geraden Rohrabschnitt (31) und dem zweiten geraden Rohrabschnitt (33) angeordnet ist; der erste gerade Rohrabschnitt (31) mit einer jeweiligen der ersten Anschlussöffnungen (201) verbunden ist; der zweite gerade Rohrabschnitt (33) mit einem jeweiligen der Flüssigkeitseinlässe (101) verbunden ist; und der erste Wellrohrabschnitt (32) flexibel ist;
jede der Flüssigkühlplatten (10) ein zweites Fitting (11) umfasst, das einen jeweiligen der Flüssigkeitseinlässe (101) definiert, der erste gerade Rohrabschnitt (31) mit einem jeweiligen der ersten Fittinge (211) ummantelt ist und der zweite gerade Rohrabschnitt (33) mit dem zweiten Fitting (11) ummantelt ist;
**dadurch gekennzeichnet, dass** die Flüssigkeitseintritts-Hauptleitung (20) einen Gesamtwassereinlauf (202) umfasst; und
in einer Richtung weg vom Gesamtwassereinlauf (202) die Innendurchmesser der Vielzahl von ersten Fittingen (211) allmählich zunehmen.

2. Flüssigkühlanordnung nach Anspruch 1, **dadurch gekennzeichnet, dass** der erste gerade Rohrabschnitt (31) mit dem ersten Fitting (211) aufgeweitet ist und der zweite gerade Rohrabschnitt (33) mit dem zweiten Fitting (11) aufgeweitet ist.

3. Flüssigkühlanordnung nach Anspruch 1, **dadurch gekennzeichnet, dass** eine Porenweite des ersten geraden Rohrabschnitts (31) an eine Porenweite der ersten Anschlussöffnung (201) angepasst ist und eine Porenweite des zweiten geraden Rohrabschnitts (33) an eine Porenweite des Flüssigkeitseinlasses (101) angepasst ist.

4. Flüssigkühlanordnung nach Anspruch 1, **dadurch gekennzeichnet, dass** die Flüssigkeitseintritts-Hauptleitung (20) eine Vielzahl von ersten Hauptleitungen (21) umfasst, die getrennt angeordnet sind, und die Vielzahl von ersten Hauptleitungen (21) in Folge verbunden sind;
zumindest ein Teil der Vielzahl von ersten Hauptleitungen (21) solche der Vielzahl von ersten Anschlussöffnungen (201) aufweist.

5. Flüssigkühlanordnung nach Anspruch 4, **dadurch gekennzeichnet, dass** zwischen benachbarten ersten Hauptleitungen der Vielzahl von ersten Hauptleitungen (21) ein erster Steckverbinder (22) vorgesehen ist und der erste Steckverbinder (22) mit den benachbarten ersten Hauptleitungen der Vielzahl von ersten Hauptleitungen (21) in Verbindung steht.

6. Flüssigkühlanordnung nach Anspruch 1, ferner umfassend eine Flüssigkeitsrückführ-Hauptleitung (40), wobei die Vielzahl von Flüssigkühlplatten (10) Flüssigkeitsrückführöffnungen (102) umfassen, die mit den Zirkulationskanälen in Verbindung stehen;
die Flüssigkeitsrückführ-Hauptleitung (40) eine Vielzahl von zweiten Anschlussöffnungen (401) umfasst, die Vielzahl von zweiten Anschlussöffnungen (401) und die Flüssigkeitsrückführöffnungen (102) in Eins-zu-eins-Entsprechung angeordnet sind, ein zweites Verbindungsrohr (50) zwischen jeder der zweiten Anschlussöffnungen (401) und einer jeweiligen der Flüssigkeitsrückführöffnungen (102) verbunden ist und das zweite Verbindungsrohr (50) zumindest teilweise flexibel ist.

7. Flüssigkühlanordnung nach Anspruch 6, **dadurch gekennzeichnet, dass** das zweite Verbindungsrohr (50) einen dritten geraden Rohrabschnitt (51), einen zweiten Wellrohrabschnitt (52) und einen vierten geraden Rohrabschnitt (53) umfasst, der zweite Wellrohrabschnitt (52) zwischen dem dritten geraden Rohrabschnitt (51) und dem vierten geraden Rohrabschnitt (53) angeordnet ist, der dritte gerade Rohrabschnitt mit der zweiten Anschlussöffnung (401) verbunden ist, der vierte gerade Rohrabschnitt (53) mit der Flüssigkeitsrückführöffnung (102) verbunden ist und der zweite Wellrohrabschnitt flexibel ist.

8. Flüssigkühlanordnung nach Anspruch 7, **dadurch gekennzeichnet, dass** eine Porenweite des dritten geraden Rohrabschnitts (51) an eine Porenweite der zweiten Anschlussöffnung (401) angepasst ist und eine Porenweite des vierten geraden Rohrabschnitts (53) an eine Porenweite der Flüssigkeitsrückführöffnung (102) angepasst ist.

9. Flüssigkühlanordnung nach Anspruch 7, **dadurch gekennzeichnet, dass** die Flüssigkeitsrückführ-Hauptleitung (40) eine Vielzahl von dritten Fittingen (411) umfasst und die dritten Fittinge die zweiten Anschlussöffnungen (401) definieren, jede der Flüssigkühlplatten ein viertes Fitting (12) umfasst, das die Flüssigkeitsrückführöffnung definiert, der dritte gerade Rohrabschnitt (51) mit einem jeweiligen der dritten Fittinge (411) ummantelt ist und der vierte gerade Rohrabschnitt (53) mit dem vierten Fitting (12) ummantelt ist.

10. Flüssigkühlanordnung nach Anspruch 6, **dadurch gekennzeichnet, dass** jeder der Flüssigkeitseinlässe und eine entsprechende der Flüssigkeitsrückführöffnungen (102) an einem selben Ende einer jeweiligen der Flüssigkühlplatten (10) angeordnet sind und die Flüssigkeitseintritts-Hauptleitung (20) und die Flüssigkeitsrückführ-Hauptleitung (40) an selben Enden der Flüssigkühlplatten (10) angeordnet sind.

11. Flüssigkühlanordnung nach Anspruch 6, **dadurch gekennzeichnet, dass** die Flüssigkeitsrückführöffnung (102) an einem Ende der Flüssigkühlplatte angeordnet ist, das von einem jeweiligen der Flüssigkeitseinlässe (101) wegweisend ist.

12. Batteriepack, umfassend die Flüssigkühlanordnung nach einem der Ansprüche 1 bis 11.

## Revendications

1. Ensemble de refroidissement liquide comprenant :
une pluralité de plaques de refroidissement liquide (10), dans lequel la pluralité de plaques de refroidissement liquide (10) sont agencées en séquence à intervalles, un espace d'installation pour installer un élément chauffant est formé entre des plaques adjacentes de la pluralité de plaques de refroidissement liquide (10), et la pluralité de plaques de refroidissement liquide (10) comprennent des canaux de circulation et des orifices d'entrée de liquide (101) communiquant chacun avec un canal correspondant des canaux de circulation ; et
une conduite principale d'entrée de liquide (20), dans lequel la conduite principale d'entrée de liquide (20) comprend une pluralité de premiers orifices d'accouplement (201), et la pluralité de premiers orifices d'accouplement (201) et les orifices d'entrée de liquide (101) sont agencés en correspondance un à un ;
dans lequel des premiers tubes d'accouplement (30) sont connectés entre les premiers orifices d'accouplement (201) et les orifices d'entrée de liquide (101), et chacun des premiers tubes d'accouplement (30) est au moins partiellement flexible ;
dans lequel la conduite principale d'entrée de liquide (20) comprend une pluralité de premiers raccords (211), et les premiers raccords (211) définissent les premiers orifices d'accouplement (201) ; chacun des premiers tubes d'accouplement (30) comprend une première section de tube droite (31), une première section ondulée (32) et une deuxième section de tube droite (33) ; la première section ondulée (32) est située entre la première section de tube droite (31) et la deuxième section de tube droite (33) ; la première section de tube droite (31) est connectée à un orifice respectif des premiers orifices d'accouplement (201) ; la deuxième section de tube droite (33) est connectée à un orifice respectif des orifices d'entrée de liquide (101) ; et la première section ondulée (32) est flexible ;
chacune des plaques de refroidissement liquide (10) comprend un deuxième raccord (11) définissant un orifice respectif des orifices d'entrée de liquide (101), la première section de tube droite (31) est gainée avec un premier raccord respectif des premiers raccords (211), et la deuxième section de tube droite (33) est gainée avec le deuxième raccord (11) ;
**caractérisé en ce que** la conduite principale d'entrée de liquide (20) comprend une entrée d'eau totale (202) ; et
dans une direction s'éloignant de l'entrée d'eau totale (202), les diamètres intérieurs de la pluralité de premiers raccords (211) augmentent progressivement.

2. Ensemble de refroidissement liquide selon la revendication 1, dans lequel la première section de tube droite (31) est dilatée avec le premier raccord (211), et la deuxième section de tube droite (33) est dilatée avec le deuxième raccord (11).

3. Ensemble de refroidissement liquide selon la revendication 1, dans lequel une taille de pore de la première section de tube droite (31) est adaptée à une taille de pore du premier orifice d'accouplement (201), et une taille de pore de la deuxième section de tube droite (33) est adaptée à une taille de pore de l'orifice d'entrée de liquide (101).

4. Ensemble de refroidissement liquide selon la revendication 1, dans lequel la conduite principale d'entrée de liquide (20) comprend une pluralité de premières conduites principales (21) qui sont agencées séparément, et la pluralité de premières conduites principales (21) sont connectées en séquence ;
au moins une partie de la pluralité de premières conduites principales (21) comportent des orifices de la pluralité de premiers orifices d'accouplement (201).

5. Ensemble de refroidissement liquide selon la revendication 4, dans lequel un premier connecteur à encliquetage rapide (22) est prévu entre des premières conduites principales adjacentes de la pluralité de premières conduites principales (21), et le premier connecteur à encliquetage rapide (22) est en communication avec les premières conduites principales adjacentes de la pluralité de premières conduites principales (21).

6. Ensemble de refroidissement liquide selon la revendication 1, comprenant en outre une conduite principale de retour de liquide (40), dans lequel la pluralité de plaques de refroidissement liquide (10) comprennent des orifices de retour de liquide (102) en communication avec les canaux de circulation ;
la conduite principale de retour de liquide (40) comprend une pluralité de deuxièmes orifices d'accouplement (401), la pluralité de deuxièmes orifices d'accouplement (401) et les orifices de retour de liquide (102) sont agencés en correspondance un à un, un deuxième tube d'accouplement (50) est connecté entre chaque orifice des deuxièmes orifices d'accouplement (401) et un orifice respectif des orifices de retour de liquide (102), et le deuxième tube d'accouplement (50) est au moins partiellement flexible.

7. Ensemble de refroidissement liquide selon la revendication 6, dans lequel le deuxième tube d'accouplement (50) comprend une troisième section de tube droite (51), une deuxième section ondulée (52) et une quatrième section de tube droite (53), la deuxième section ondulée (52) est agencée entre la troisième section de tube droite (51) et la quatrième section de tube droite (53), la troisième section de tube droite est connectée au deuxième orifice d'accouplement (401), la quatrième section de tube droite (53) est connectée à l'orifice de retour de liquide (102), et la deuxième section ondulée est flexible.

8. Ensemble de refroidissement liquide selon la revendication 7, dans lequel une taille de pore de la troisième section de tube droite (51) correspond à une taille de pore du deuxième orifice d'accouplement (401), et une taille de pore de la quatrième section de tube droite (53) correspond à une taille de pore de l'orifice de retour de liquide (102).

9. Ensemble de refroidissement liquide selon la revendication 7, dans lequel la conduite principale de retour de liquide (40) comprend une pluralité de troisièmes raccords (411), et les troisièmes raccords définissent les deuxièmes orifices d'accouplement (401), chaque plaque de refroidissement liquide comprend un quatrième raccord (12) définissant l'orifice de retour de liquide, la troisième section de tube droite (51) est gainée avec un troisième raccord respectif des troisièmes raccords (411), et la quatrième section de tube droite (53) est gainée avec le quatrième raccord (12).

10. Ensemble de refroidissement liquide selon la revendication 6, dans lequel chaque orifice d'entrée de liquide et un orifice correspondant des orifices de retour de liquide (102) sont agencés à une même extrémité d'une plaque respective des plaques de refroidissement liquide (10), et la conduite principale d'entrée de liquide (20) et la conduite principale de retour de liquide (40) sont situées aux mêmes extrémités des plaques de refroidissement liquide (10).

11. Ensemble de refroidissement liquide selon la revendication 6, dans lequel l'orifice de retour de liquide (102) est agencé à une extrémité de la plaque de refroidissement liquide qui est éloignée d'un orifice respectif des orifices d'entrée de liquide (101).

12. Batterie, comprenant l'ensemble de refroidissement liquide selon l'une quelconque des revendications 1 à 11.
